# EUROPÄISCHE PATENTSCHRIFT

(11) **EP 1 505 355 B1**
(45) Veröffentlichungstag und Bekanntmachung des Hinweises auf die Patenterteilung: **05.03.2008**
(21) Anmeldenummer: 04017843.6
(22) Anmeldetag: 28.07.2004
(51) Int. Cl.: F24D 11/02, F28D 20/00

(54) **Gebäude-Klimatisierungssystem**
Air conditioning for buildings
Système de climatisation pour bâtiments

(30) Priorität: 31.07.2003 DE 10334951
(43) Veröffentlichungstag der Anmeldung: 09.02.2005
(73) Patentinhaber: Vögerl, Albert, 92318 Neumarkt (DE)
(72) Erfinder: Vögerl, Albert, 92318 Neumarkt (DE); Forstner, Martin, 92318 Neumarkt (DE)
(74) Vertreter: Tergau & Pohl Patentanwälte

(56) Entgegenhaltungen:
- DE-A- 19 836 011
- DE-A1- 3 032 748
- DE-A1- 19 536 335
- DE-A1- 19 850 777
- US-A- 4 517 958

## Beschreibung

Die Erfindung betrifft ein Gebäude-Klimatisierungssystem nach dem Oberbegriff des Anspruchs 1.

Ein derartiges Gebäude-Klimatisierungssystem ist beispielsweise aus DE 30 32 748 A1 bekannt. Dort ist einer Heizungsanlage und einem Regenwasserspeicher mit darin angeordnetem Wärmetauscher eine Wärmepumpe zwischengeschaltet. Ein ähnliches System ist auch aus DE 198 50 777 A1 bekannt.

Bei einem weiteren aus DE 198 36 011 A1 bekannten Gebäude-Klimatisierungssystem sind ein Regenwasserspeicher mit eingebautem Kältetauscher als Kältespeicher und ein Pufferspeicher als Wärmespeicher vorgesehen. Das System weist weiterhin einen Wasser-Luft-Wärmetauscher auf, der zur Kühlung bzw. Erwärmung von Klimatisierungsluft mit im Regenwasserspeicher gekühlten Kaltwasser und/oder im Pufferspeicher erhitzten Warmwasser durchströmbar ist. Das System weist weiterhin ein Heizkörpernetz auf, das mit ebenfalls im Pufferspeicher erhitztem Warmwasser durchströmbar ist. Ein ähnliches System ist aus US 4,517,958 A bekannt.

Bei einer aus DE 195 36 335 A1 bekannten Gebäude-Klimaanlage wird Regenwasser aus einer Zisterne direkt in Kühlrohre innerhalb eines Gebäudes geleitet. Die Kühlung ist somit als offenes System gestaltet. Die Einspeisung von eventuell verunreinigtem Regenwasser in Kühlleitungen, die beispielsweise in Gebäudedecken verlegt sind, ist jedoch problematisch und erscheint nicht praxisgerecht.

Aus den Druckschriften 298 16 006 U1, DE 298 08 531 U1 und DE 298 01 213 U1 sind ferner Pufferspeicher für Heiz- und Brauchwasseranlagen bekannt. Aus DE 297 15 643 U1 sind schließlich Baueinheiten zur Erstellung einer Raumheizungs- bzw. Kühlungsanlage bekannt.

Der Erfindung liegt die Aufgabe zugrunde, ein besonders effektives und konstruktiv einfach aufgebautes Gebäude-Klimatisierungssystem anzugeben. Insbesondere soll das System eine zuverlässige Nutzung einer Regenwasserzisterne als Wärmequelle bzw. -senke erlauben, so dass Wärmeenergie vom Heizkörper in die Regenwasserzisterne bzw. umgekehrt übertragbar ist.

Diese Aufgabe wird erfindungsgemäß gelöst durch ein Gebäude-Klimatisierungssystem mit den Merkmalen des Anspruchs 1. Hierbei ist innerhalb einer Regenwasserzisteme ein Wärmetauscher angeordnet, welcher Teil eines geschlossenen Kreislaufs ist, der einen in einem Gebäude installierten Heiz-/Kühlkörper einschließt. Das Regenwasser wird somit nicht in das Gebäude geleitet. Das Klimatisierungssystem ist damit hinsichtlich einer Verschmutzung des Regenwassers relativ unempfindlich. Das durch den Wärmetauscher und den mindestens einen Heiz-/Kühlkörper strömende Wärmeträgermedium, insbesondere Wasser, wird ähnlich dem Wärmeträgermedium in einer herkömmlichen Warmwasser-Zentralheizung in einem geschlossenen Kreislauf umgepumpt. Vorzugsweise weist das Gebäude-Klimatisierungssystem eine Verbindung mit einer Gebäude-Heizanlage auf, so dass der oder die Heiz-/Kühlkörper wahlweise mittels der Regenwasserzisterne gekühlt oder mittels der Heizanlage erwärmt werden kann bzw. können. Auch die gleichzeitige Heizung einzelner Räume innerhalb eines Gebäudes und Kühlung anderer Räume im Gebäude ist mit dem Gebäude-Klimatisierungssystem möglich. Auf eine gesonderte Kühlanlage oder Wärmepumpe kann hierbei verzichtet werden.

Das Gebäude-Klimatisierungssystem ist für Altbausanierungen ebenso geeignet wie für jegliche Art von Neubauten, beispielsweise Ein- und Mehrfamilienhäuser, Bürogebäude, Industriegebäude und öffentliche Gebäude, auch Hallen und Veranstaltungssäle, wobei die Abmessungen der Räume und die Baustoffe keine Rolle spielen. Besonders geeignet ist das Gebäude-Klimatisierungssystem insbesondere für Niedrigenergie- und Passivhäuser, welche typischerweise hohe solare Energiegewinne ermöglichen. Gerade diese an sich gewünschten solaren Gewinne führen häufig im Sommer zu einer starken Aufheizung des Gebäudes, welche durch Kühl- und/ oder Beschattungsmaßnahmen zu kompensieren sind. Durch das Gebäude-Klimatisierungssystem ist eine besonders energiesparende Kühlmöglichkeit gegeben.

Die Abgabe von Wärmeenergie aus dem Gebäude an die Kühlwasser-Zisterne ist insbesondere in Fällen, in denen ohnehin eine Zisterne vorhanden bzw. geplant ist, mit geringem Aufwand realisierbar. Die Bodenbeschaffenheit am Standort des Gebäudes spielt praktisch keine Rolle, da insbesondere im Vergleich zu Erdwärmetauschem kaum zusätzliche Leitungen im Erdreich zu verlegen sind. Das Gebäude-Klimatisierungssystem weist daher eine gute Eignung auch für höhere Bodenklassen mit felsigen oder stark bindigen Böden auf. Weiterhin ist der Verzicht auf aufwändige Aufgrabungen und insgesamt der geringe Platzbedarf des Gebäude-Klimatisierungssystems vorteilhaft, woraus sich die Eignung des Systems für unterschiedlichste städtebauliche Konzepte, auch bei verdichteter Bauweise, ergibt.

Der Wärmetauscher in der Regenwasserzisterne ist vorzugsweise als Rohrwärmetauscher ausgebildet. Alternativ ist jedoch auch ein beliebiger anderer Wärmetauscher, beispielsweise Plattenwärmetauscher verwendbar. Die Wärmetauscherfläche beträgt in Abhängigkeit insbesondere von den zu kühlenden Wohn- und Nutzflächen sowie vom Nutzerprofil bevorzugt mindestens 10 m². Die Regenwasserzisterne ist beispielsweise als stehender Zylinder, liegender Zylinder oder in Kugelform ausgeführt. Der Inhalt der Regenwasserzisterne beträgt in Abhängigkeit von den jeweiligen Anforderungen, abgestimmt auf die Wärmeübertragungsleistung des Wärmetauschers, bevorzugt mindestens 3000 Liter. Jede handelsübliche Zisterne ist für den Einbau des Wärmetauschers prinzipiell bekannter Bauart geeignet.

Nach einer ersten bevorzugten Ausgestaltung ist der Wärmetauscher, vorzugsweise in insgesamt etwa zylindrischer Form, zumindest annähernd zentrisch in die Zisterne eingehängt. Damit ist der Wärmetauscher besonders einfach in der Zisterne montierbar sowie gegebenenfalls, beispielsweise zu Reinigungs- oder Reparaturzwecken, aus der Zisterne entnehmbar.

Nach einer alternativen Ausgestaltung ist der Wärmetauscher an der Innenwandung der Regenwasserzisterne angeordnet. Durch die Installation des Wärmetauschers an der Seitenwand und/oder am Boden der Zisterne ist deren Zugänglichkeit, beispielsweise zu Inspektionszwecken, nicht eingeschränkt.

Als Heiz-/Kühlkörper im Gebäude ist vorzugsweise eine Wand- und/oder Deckenheizung vorgesehen. Alternativ oder zusätzlich ist auch eine Fußbodenheizung geeignet. In allen Fällen sind groß dimensionierte Wärmeübertragungsflächen im Gebäude gegeben, welche die Nutzung geringer Temperaturdifferenzen zum Heizen bzw. Kühlen ermöglichen.

Im Kühlbetrieb des Gebäude-Klimatisierungssystems wird das Regenwasser in der Zisterne durch das im Kreislauf strömende Wärmeträgermedium zumindest geringfügig erwärmt. Die Regenwasserzisterne ist in Relation zum Gebäude derart zu dimensionieren, dass zumindest während eines Großteils der Betriebsdauer keine wesentliche Aufheizung des Wassers in der Zisterne auftritt. Um eine zusätzliche Kühlmöglichkeit zu schaffen, führt nach einer vorteilhaften Weiterbildung eine Kaltwasser-Nachspeiseleitung in die Regenwasserzisterne.

Eine Grauwasserentnahme aus der Regenwasserzisterne ist typischerweise nicht vorgesehen. Vielmehr führt in einer bevorzugten Ausgestaltung eine Verbindungsleitung von der Regenwasserzisterne zu einer Zusatzzisterne, aus welcher gegebenenfalls Grauwasser entnommen wird. Mit diesem Aufbau wird das Gebäude-Klimatisierungssystem bevorzugt derart betrieben, dass das Temperatur niveau im über die Kaltwassernachspeiseleitung ergänzten Wasser der Regenwasserzisteme unterhalb des Temperaturniveaus in der Zusatzzisterne liegt. Somit ist auch bei zeitweise hohen Umgebungstemperaturen und geringen Niederschlagsmengen eine Gebäudekühlung ohne zusätzliche Kühlanlage möglich. Ferner kann abhängig von der Auslegung der nutzbaren Kühlleistung des Gebäude-Klimatisierungssystems auf aufwändige Beschattungsmaßnahmen am Gebäude verzichtet werden.

Nach einer besonders bevorzugten Weiterbildung wird das in der Zusatzzisterne vorhandene Temperaturniveau zur Gebäudeklimatisierung benutzt, indem ein zumindest thermisch mit den Heiz-/Kühlkörpern gekoppelter Wärmetauscher in der Zusatzzisterne angeordnet ist. Während die Regenwasserzisterne bevorzugt zum Kühlen genutzt wird, dient die Zusatzzisterne vorzugsweise der Beheizung des Gebäudes. Zum einen kann aus der Regenwasserzisterne erwärmtes Wasser in die Zusatzzisterne übergeleitet werden. Zum anderen sind vorzugsweise weitere Mittel zur Temperaturerhöhung in der Zusatzzisterne vorgesehen. Insbesondere ist zu diesem Zweck eine thermische Solaranlage geeignet, deren Wärmeträgermedium der Beheizung der Zusatzzisterne mittels des in dieser eingebauten Wärmetauschers dient. Hierbei ist das in der thermischen Solaranlage strömende Wärmeträgermedium nicht notwendigerweise mit dem den Wärmetauscher in der Zusatzzisterne durchströmenden Wärmeträgermedium identisch. Vielmehr ist vorzugsweise ein insbesondere als Schichtenspeicher ausgebildeter Wärmespeicher vorgesehen, welcher mittels der Solaranlage aufheizbar ist, wobei die Wärmeübertragung vom Wärmespeicher zur Zusatzzisterne mittels eines weiteren, im Wärmespeicher eingebauten Wärmetauschers erfolgt. Eine Energieabgabe vom Wärmespeicher in die Zusatzzisterne ist dabei nur dann vorgesehen, wenn die Wärmespeicherkapazität des Wärmespeichers ausgeschöpft ist, d. h. die von der Solaranlage abgegebene thermische Energie nicht mehr vom Wärmespeicher aufgenommen werden kann. Auf diese Weise kann die außerhalb des Gebäudes installierte, einen mehrfachen Rauminhalt als der direkt an die Solaranlage angeschlossene, im Gebäude aufgestellte Wärmespeicher aufweisende Zusatzzisterne die Energiespeicherkapazitäten der Solaranlage effektiv erhöhen. Das Temperaturniveau in der Zusatzzisterne ist typischerweise höher als in der Regenwasserzisterne, jedoch niedriger als in dem Wärmespeicher im Gebäude.

Nach einer vorteilhaften Weiterbildung wird das im Vergleich zur Regenwasserzisterne in der Zusatzzisterne erhöhte Temperaturniveau zum Betrieb einer Wasser/Wasser-Wärmepumpe genutzt. Dabei wird das aus der Zusatzzisterne entnommene, der Wärmepumpe zugeführte, durch diese abgekühlte Wasser anschließend in die als Kühlzisterne dienende Regenwasserzisterne geleitet. Das Zwei-Zisternen-System der Gebäudeklimatisierungsanlage stellt damit energetisch besonders effektiv miteinander verknüpfte Wärme- bzw. Kältespeicher bereit. Der Rauminhalt der Zusatzzisterne als Wärmespeicher weicht vom Rauminhalt der Regenwasserzisterne als Kältespeicher vorzugsweise um nicht mehr als den Faktor zwei ab, insbesondere sind die Volumina der beiden Speicher etwa identisch. Im Vergleich zum innerhalb des Gebäudes installierten Wärmespeicher ist die maximale Füllmenge jeder Zisterne wesentlich höher, insbesondere beträgt der Rauminhalt einer Zisterne mindestens das vierfache, beispielsweise das achtfache des nutzbaren Speichervolumens des Wärmespeichers im Gebäude. Im Vergleich zu letztgenanntem Wärmespeicher nehmen die Zisternen somit größere Flüssigkeitsmengen bei geringeren Temperaturdifferenzen zur Umgebung auf und eignen sich insbesondere für die Langzeitspeicherung von Wärme- bzw. Kälteenergie, beispielsweise über einen Zeitraum von mehreren Wochen. Insbesondere mit Unterstützung durch die Wärmepumpe sind auf diese Weise Energiegewinne durch eine thermische, beispielsweise auf dem Hausdach installierte Solaranlage auch noch in Zeiten nutzbar, in denen die Solaranlage allein die geforderte Heizleistung nicht zur Verfügung stellen würde. Die Wärmepumpe ermöglicht auch bei nur geringfügig, beispielsweise um weniger als 5 K, über der Temperatur des Grundwassers oder des die Zisterne umgebenden Erdreichs liegender Temperatur des in der Zisterne gespeicherten Wassers eine besonders energiesparende Aufheizung des Wärmespeichers, welcher auch direkt mittels der Solaranlage beheizbar ist. Auf diese Weise ist ein energetischer Kreislauf geschaffen, welcher die verzögerte Nutzung der solar gewonnenen thermischen Energie ermöglicht: Zunächst wird mit der Solaranlage direkt der typischerweise innerhalb des zu klimatisierenden Gebäudes aufgestellte Wärmespeicher aufgeheizt. Im Fall überschüssiger Solarenergie wird Wärme aus dem Wärmespeicher in die Zusatzzisterne übertragen und dort, auf einem herabgesetzten Temperaturniveau, über einen Zeitraum von mehreren Tagen bis Wochen gespeichert. Im Bedarfsfall, d. h. bei einem Defizit an unmittelbar verfügbarer Solarenergie, wird das im Vergleich zur Umgebungstemperatur immer noch erhöhte Temperaturniveau in der Zusatzzisterne genutzt, um mittels der Wärmepumpe ein für die Gebäudebeheizung und/oder Warmwasserbereitung ausreichendes Temperaturniveau mit geringstmöglichem energetischen Aufwand zu erreichen.

Das die Regenwasserzisterne als Langfrist-Kältespeicher und die Zusatzzisterne als Langfrist-Wärmespeicher umfassende Gebäudeklimatisierungssystem ist insbesondere geeignet, Heiz- und Kühlleistung für unterschiedliche Teile oder Einrichtungen des Gebäudes gleichzeitig zur Verfügung zu stellen. Hierzu ist in vorteilhafter Weise mindestens ein Umschaltventil vorgesehen, welches eine Einbindung eines Heiz-/Kühlkörpers wahlweise in einen Heizkreislauf oder einen Kühlkreislauf ermöglicht. Vorzugsweise ist eine Mehrzahl an Umschaltventilen vorhanden, an welchen jeweils ein einzelner Heiz-/Kühlkörper oder eine Gruppe von Heiz-/Kühlkörpern angeschlossen ist. Die Umschaltventile sind in bevorzugter Ausführung fernbetätigbar, insbesondere durch einen elektromotorischen Antrieb.

Nach einer besonders vorteilhaften Weiterbildung ist die Regenwasserzisterne von einer Feuchtigkeit speichernde Schicht umgeben, welche die Wärmeabfuhr aus der Regenwasserzisterne in das umgebende Erdreich erhöht. Die Feuchtigkeit speichernde Schicht ist beispielsweise als Schüttung aus einem im Wesentlichen festen Füllmaterial, wie Blähton, gebildet. Alternativ ist die Regenwasserzisteme von einem zusätzlichen Flüssigkeitsmantel umgeben, womit eine doppelwandige Bauweise der Zisterne gegeben ist. Hierbei befinden sich in der Regenwasserzisterne und im diese umgebenden Mantel nicht notwendigerweise gleiche Flüssigkeiten. Ein höherer Verschmutzungsgrad des im Mantel gespeicherten Wassers ist beispielsweise völlig unproblematisch. Weiterhin ist die Füllhöhe des Wassers in der Regenwasserzisterne einerseits und der Flüssigkeit im diese umgebenden Mantel andererseits nicht notwendigerweise identisch. Beispielsweise ist durch einen besonders hohen Flüssigkeitsstand im Mantel eine besonders gute Wärmeübertragung ans umgebende Erdreich ermöglicht.

Der Vorteil der Erfindung liegt insbesondere darin, dass eine im Wesentlichen herkömmliche Zentralheizungsanlage durch die Nutzung einer Regenwasserzisteme mit eingebautem Wärmetauscher als Wärmesenke mit geringem baulichem Zusatzaufwand zugleich zur Gebäudekühlung genutzt werden kann.

Mehrere Ausführungsbeispiele der Erfindung werden nachfolgend anhand einer Zeichnung näher erläutert. Hierin zeigen jeweils in schematischer Ansicht:
- Fig. 1: ein Gebäude-Klimatisierungssystem mit einem an der Innenwandung einer Regenwasserzisterne installierten Wärmetauscher,
- Fig. 2: ein Gebäude-Klimatisierungssystem mit einem zentral in einer Regenwasserzisteme installierten Wärmetauscher,
- Fig. 3: ein Gebäude-Klimatisierungssystem mit einem an der Innenwandung einer Regenwasserzisterne installierten Wärmetauscher und einem die Regenwasserzisterne umgebenden Flüssigkeitsmantel,
- Fig. 4: ein Gebäude-Klimatisierungssystem mit einer Regenwasserzisterne mit zentralem Wärmetauscher und einem die Regenwasserzisterne umgebenden Flüssigkeitsmantel,
- Fig. 5: ein Gebäude-Klimatisierungssystem mit einer Regenwasserzisterne und einer Wärmezisterne als zusätzlicher Zisterne und
- Fig. 6: ein Umschaltventil in einem Gebäude-Klimatisierungssystem nach Fig. 5.

Einander entsprechende Teile sind in allen Figuren mit den gleichen Bezugszeichen versehen.

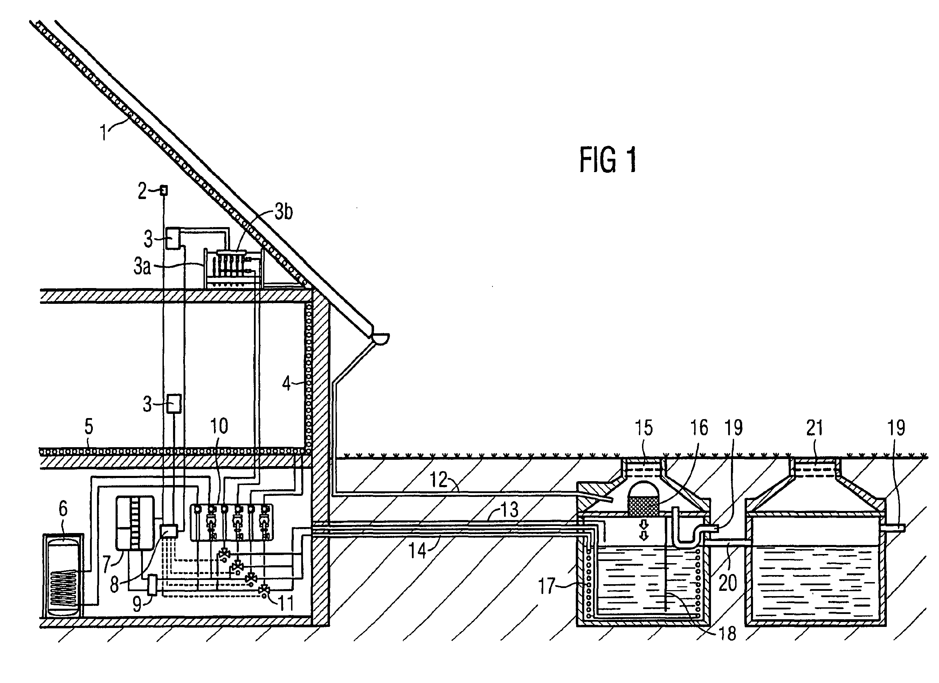

Die Fig. 1 bis 4 zeigen jeweils in schematischem Querschnitt ein Gebäude-Klimatisierungssystem mit einem Haus, in welchem zur bedarfsweisen Heizung oder Kühlung als Heiz-/Kühlkörper eine-Deckenheiz-/Kühlfläche 1, eine Wandheiz-/Kühlfläche 4 und eine Fußbodenheiz-/Kühlfläche 5 vorhanden sind. Ein Feuchtigkeitssensor 2 sowie ein Raumthermostat 3 befinden sich jeweils in einem oder mehreren Räumen des Gebäudes. Jeder Raumthermostat 3 wirkt zusammen mit jeweils einem Etagenverteiler 3a, welcher Stellantriebe 3b umfasst und lediglich beispielhaft in einem Fall in Fig. 1 dargestellt ist. In einem Kellerraum des Gebäudes sind ein Speicher 6, ein Heizgerät 7, eine Steuer- und Regeleinheit 8, eine hydraulische Weiche 9, ein Pumpen- und Mischerblock 10 sowie Umschaltventile 11 installiert. Damit ist eine Verknüpfung hergestellt zwischen der beliebigen Heizanlage des Gebäudes, beispielsweise Öl-, Gas-, Holz- oder Solarheizanlage und der nachfolgend näher beschriebenen Kühlanlage. Ebenso kann eine Verbindung bestehen mit einer Wärmepumpe und/oder einer Photovoltaikanlage. Die für den Heizkreislauf vorhandenen Pumpen sind auch für die Gebäudekühlung nutzbar, so dass sich der Energiebedarf für die Kühlung praktisch auf die für die Umschaltung zwischen Heiz- und Kühlbetrieb benötigten Umschaltventile 11 beschränkt. Insbesondere im Kühlbetrieb werden die Gebäudemassen als Energiespeicher genutzt. Auf Hohldecken oder Luftkanäle wird vorzugsweise verzichtet, so dass damit verbundene Risiken wie Schimmelpilz- oder Bakterienbildung, Staub- oder Schmutzbefall prinzipbedingt ausgeschlossen sind. Sofern das Gebäude eine Lüftungsanlage aufweist, ist jedoch auch eine Anbindung des Gebäude-Klimatisierungssystems an die Lüftungsanlage möglich. Sowohl mit als auch ohne Lüftungsanlage ermöglich das mit der Gebäudeheizung verbundene, mit Hilfe unter anderem der Feuchtigkeitssensoren 2 geregelte Gebäude-Klimatisierungssystem eine schonende Abkühlung, so dass Kondensatbildung, welche bei zu schnellen Temperaturwechseln in herkömmlichen Klimatisierungssystemen auftreten kann, zuverlässig vermieden wird.

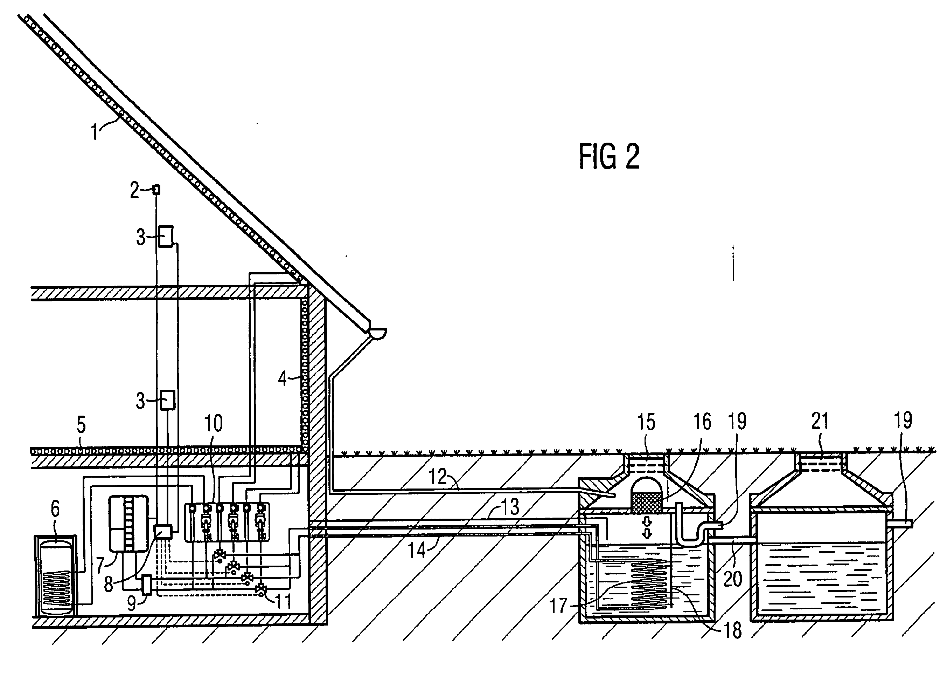

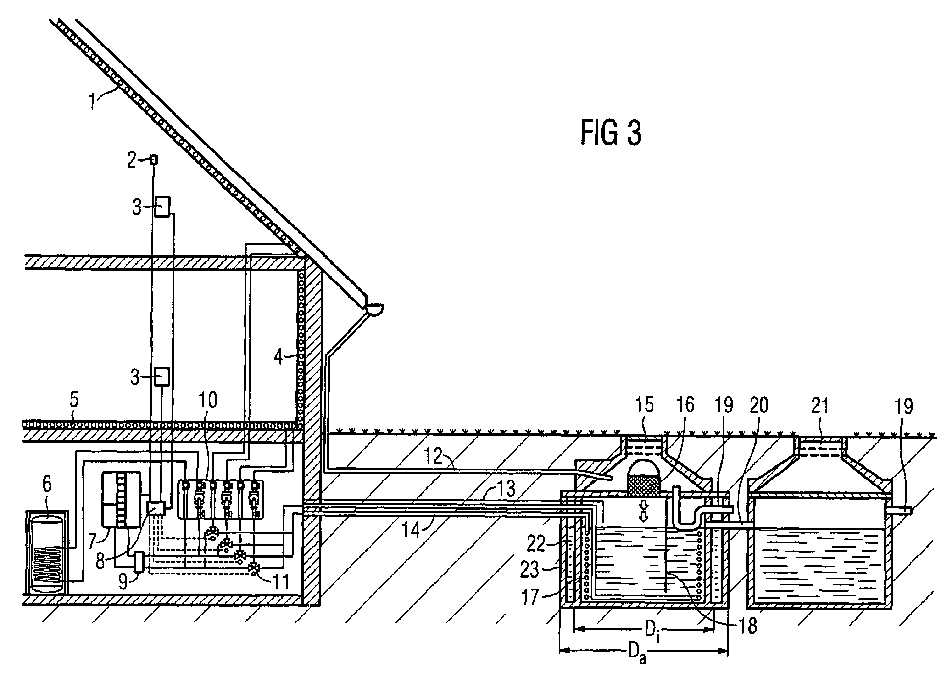

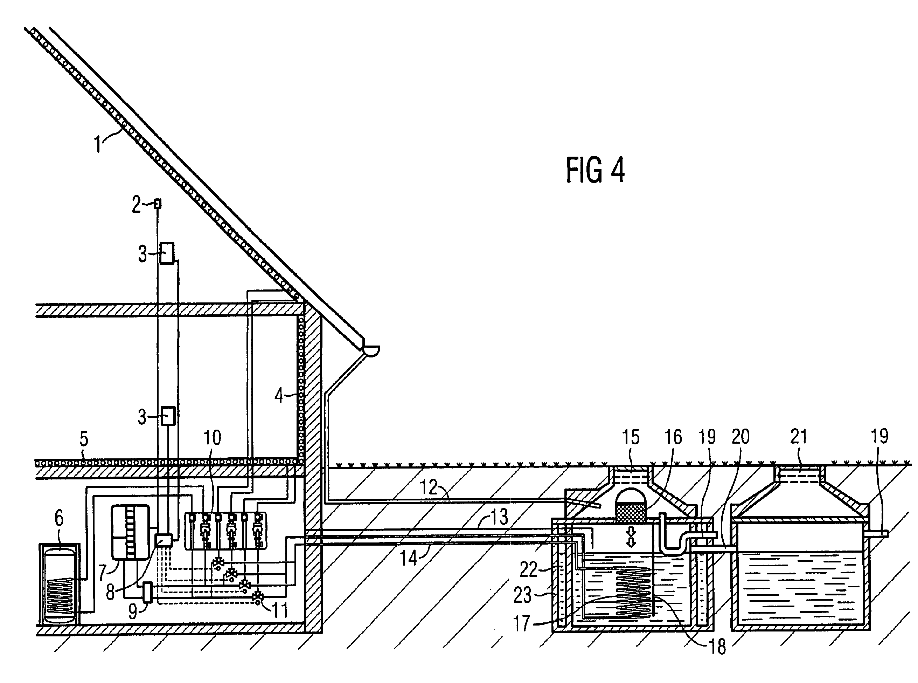

Eine auch als Kühlzisterne bezeichnete Regenwasserzisterne 15 beinhaltet einen auch als Zisternenkollektor bezeichneten Wärmetauscher 17. Ein Temperaturfühler 18 weist eine nicht dargestellte Wirkverbindung mit der Regeleinheit 8 auf. Der Wärmetauscher 17 ist in den Ausführungsbeispielen nach den Fig. 1 und 3 seitlich an der Innenwandung der Regenwasserzisterne 15 mit Hilfe nicht näher dargestellter Montageschienen und Rohrschellen und in den Ausführungsbeispielen nach den Fig. 2 und 4 zentral in der Regenwasserzisterne 15 installiert. Der Wärmetauscher 17 wird entweder bereits bei der Fertigung der Regenwasserzisteme 15 oder vor Ort nach dem Einbau der Regenwasserzisterne 15 montiert. In allen Fällen wird der Wärmetauscher 17 über eine Verbindungsleitung 14 an die vorstehend beschriebene Heizanlage angeschlossen und bildet damit einen Teil eines Kreislaufs für ein Wärmeträgermedium, insbesondere Wasser. Im Gebäude ist die zur Verfügung stehende Heizleistung und Kühlleistung beliebig verteilbar. Beispielsweise wird der Raum im Dachgeschoss gekühlt, während der Raum im Erdgeschoss gleichzeitig beheizt wird. Hierbei ist die Temperatur in jedem Raum bei einfachster Bedienung gradgenau regelbar. Ein Wärmetauscher innerhalb des Gebäudes zur Übertragung der Wärme von den Heiz-/Kühlkörpern 1,4,5 an die Regenwasserzisterne ist nicht vorgesehen. Hierdurch ist eine besonders geringe Systemträgheit gegeben. Dies fördert die Wirtschaftlichkeit des Gebäude-Klimatisierungssystem ebenso wie die Tatsache, dass keine Frostschutzmittel oder Kühlkreislauf-Zusatzmittel erforderlich sind.

Eine Regenwasserzulaufleitung 12 leitet Wasser vom Dach des Gebäudes in die Regenwasserzisterne 15. Zusätzlich kann mittels einer Kaltwasser-Nachspeiseleitung 13 bedarfsweise kühles Wasser, insbesondere Leitungswasser, in die Regenwasserzisteme 15 eingeleitet werden. Während das Kaltwasser durch die Kaltwasser-Nachspeiseleitung 13 ohne weitere Filterung direkt in das in der Regenwasserzisteme 15 gespeicherte Wasser eingeleitet wird, wird das durch die Regenwasserzulaufleitung 12 zugeleitet Wasser mittels eines Filters 16 gefiltert.

Die Temperatur des Wassers in der Regenwasserzisterne 15 beträgt typischerweise ca. 12 bis 14°C. Prinzipiell ist das Gebäude-Klimatisierungssystem für alle Klimazonen geeignet. Durch nachfließendes Regenwasser und gegebenenfalls zusätzlich über die Nachspeiseleitung 13 zugeführtes Frischwasser ist die Regenwasserzisterne 15 selbstreinigend. Ein Reinigung des Filters 16 ist mit geringem Aufwand möglich. Ansonsten ist die Regenwasserzisterne 15 zumindest im Wesentlichen wartungsfrei, wobei bedarfsweise der Wärmetauscher 17 zugänglich ist und insbesondere bei den Bauweisen nach den Fig. 2 und 4 auch auf einfache Weise aus der Regenwasserzisterne 15 entnommen werden kann.

Von der Regenwasserzisterne 15 aus führt eine Verbindungsleitung 20, welche den maximalen Flüssigkeitsstand bestimmt, zu einer Zusatzzisterne 21. Jede Zisterne 15,21 weist weiterhin eine Überlaufleitung 19 auf. Eine Wasserentnahme, d.h. Grauwasserentnahme ist in der Regel ausschließlich aus der Zusatzzisterne 21 vorgesehen. Das Volumen der Zusatzzisterne 21 übersteigt das Volumen der Regenwasser- oder Kühlzisteme 15. Da eine Frischwasserzuführung mittels der Kaltwasser-Nachspeiseleitung 13 ausschließlich in die vergleichsweise kleine Kühlzisterne 15 erfolgt, lässt sich die für die Nutzbarkeit des Wärmetauschers 17 maßgebliche Wassertemperatur in der Regenwasserzisterne 15 durch Frischwasserzufuhr rasch absenken. Bereits erwärmtes Wasser wird durch die Verbindungsleitung 20 in die Zusatzzisterne 21 übergeleitet, so dass sich in dieser ein höheres Temperaturniveau als in der Kühlzisterne 15 einstellt.

In den Ausführungsbeispielen nach den Fig. 3 und 4 ist das in der Zisterne 15 gespeicherte, gegebenenfalls durch Frischwasser ergänzte Regenwasser umgeben von einem Flüssigkeitsmantel 22, allgemein als Feuchtigkeit speichernde Schicht bezeichnet. Alternativ ist als Feuchtigkeit speichernde Schicht 22 auch ein Wasser speicherndes Füllmaterial, beispielsweise Blähton, verwendbar. Nach einer weiteren vorteilhaften Alternative ist der dargestellte Flüssigkeitsmantel 22 zusätzlich von einem im Wesentlichen festen Feuchtigkeit speichernden Material umgeben. In jedem Fall dient die Feuchtigkeit speichernde Schicht 22 dazu, den Wärmeübergang vom Wasser in der Regenwasserzisterne 15 an das umgebende Erdreich zu beschleunigen. Der Außendurchmesser der den Flüssigkeitsmantel 22 einschließenden Außenwandung 23 ist mit Dₐ angegeben und übersteigt den Innendurchmesser Dᵢ des Flüssigkeitsmantels 22, der dem Außendurchmesser der im Wesentlichen zylindrischen Regenwasserzisterne 15 entspricht, um mindestens 20%. Im Fall der Ausbildung der Feuchtigkeit speichernden Schicht aus einem im Wesentlichen festen Füllmaterial entfällt die Außenwandung 23. In beiden Fällen, d.h. sowohl bei einem Flüssigkeitsmantel als auch bei einer Schüttung als Feuchtigkeit speichernder Schicht 22 ist die Wärme übertragende Kontaktfläche zum umgebenden Erdreich im Vergleich zur Außenoberfläche der Regenwasserzisteme 15 deutlich erhöht. Hierdurch ist die Regenwasserzisterne 15 selbst bei hohen Außentemperaturen als alleinige Wärmesenke zur Gebäudekühlung ausreichend.

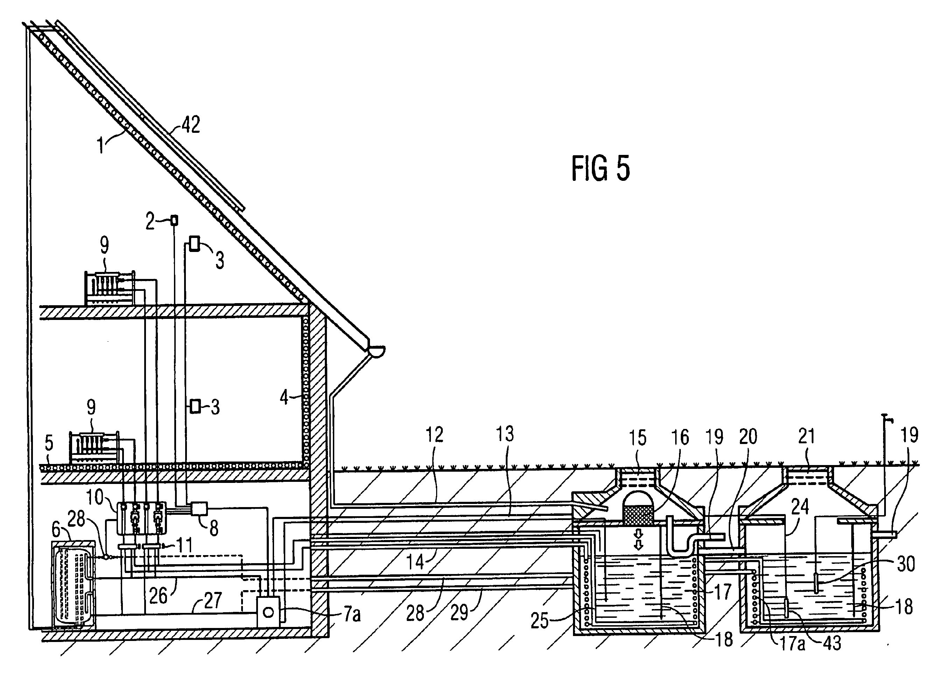

Die Fig. 5 zeigt in einer Darstellung analog den Fig. 1 bis 4 eine Weiterbildung eines Gebäude-Klimatisierungssystems, welches sich von den vorgenannten Ausführungsbeispielen hauptsächlich dadurch unterscheidet, dass die Zusatzzisterne 21 als so genannte Wärmezisterne ausgebildet ist, die mit einer WasserWasser-Wärmepumpe 7a in Verbindung steht, welche das Heizgerät 7 ersetzt. Ebenso sind auch Gebäude-Klimatisierungssysteme realisierbar, die sowohl ein Heizgerät 7, beispielsweise Öl- oder Gasheizgerät, als auch eine Wärmepumpe 7a aufweisen.

Die ebenfalls als Regenwasserzisterne bezeichnete Zusatzzisterne 21 des Gebäude-Klimatisierungssystems nach Fig. 5 ist entsprechend der Zusatzzisterne 21 der Gebäude-Klimatisierungssysteme nach den Fig. 1 bis 4 mittels einer Verbindungsleitung 20 an die Kühlzisterne 15 angeschlossen. Im Gegensatz zu den Ausführungsbeispielen nach den Fig. 1 bis 4 weist die Zusatzzisterne 21 des Gebäude-Klimatisierungssystems nach Fig. 5 folgende Einbauten auf:

Ein insgesamt etwa ringförmiger Wärmetauscher 17a ist weitgehend konzentrisch innerhalb der Zusatzzisterne 21 mit geringem Abstand von deren Innenwandung angeordnet. Der auch als Zisternenkopllektor bezeichnete Wärmetauscher 17a hat damit prinzipiell die gleiche Bauform wie der Wärmetauscher 17 der Kühlzisteme 15 nach Fig. 5 sowie der Wärmetauscher 17 nach den Fig. 1 und 3. Ebenso ist anstelle des Wärmetauschers 17a ein Wärmetauscher 17 der Bauform nach den Fig. 2 und 4 verwendbar.

Die Ausrüstung der Zusatzzisterne 21 mit einem Kollektorfühler 18 entspricht der Ausrüstung der Kühlzisterne 15. In nicht dargestellter Weise kann die Zusatzzisteme 21 bei Bedarf auch einen Filter 16 aufweisen. Mittels einer Tauchpumpe 30 kann aus der Zusatzzisterne 21 Regenwasser, beispielsweise zur Gartenbewässerung, entnommen werden. Eine weitere Tauchpumpe 43 ist mittels einer Versorgungsleitung 24 an die Wärmepumpe 7a angeschlossen. Die zugehörige Rücklaufleitung 25 verbindet die Wärmepumpe 7a mit der Kühlzisterne 15. Auf diese Weise nutzt die Wärmepumpe 7a die Zusatzzisterne 21 als Wärmequelle und die Kühlzisterne 15 als Wärmesenke. Das Gebäude-Klimatisierungssystem ist damit insbesondere dafür geeignet, gleichzeitig oder in kurzen zeitlichen Abständen sowohl Heizleistung als auch Kühlleistung zur Verfügung zu stellen. Das Temperaturniveau in der als Wärmezisterne fungierenden Zusatzzisterne 21 ist dabei bevorzugt um mehr als 5 K, insbesondere um mehr als 10 K, höher eingestellt als das Temperaturniveau in der Kühlzisterne 15. Die Wärmepumpe 7a ist mittels einer Vorlaufleitung 26 und einer Rücklaufleitung 27 an den Wärmespeicher 6 angeschlossen, um das in diesem gespeicherte Wasser aufzuheizen.

Das Temperaturniveau in der Wärmezisterne 21 kann auf verschiedene Arten angehoben werden:

Zum einen kann Wasser, das in der Kühlzisterne 15 erwärmt wurde, indem thermische Energie mittels des Wärmetauschers 17 in die Kühlzisterne 15 eingebracht wurde, aus dieser durch die Verbindungsleitung 20 in die Zusatzzisterne 21 eingespeist werden. Weiter besteht die Möglichkeit, mittels einer Solaranlage 42 gewonnenes Warmwasser in die Zuatzzisteme 21 einzuspeisen. Diese Möglichkeit wird in der Regel dann genutzt, wenn die Kapazität des als Schichtenspeicher ausgebildeten Wärmespeichers 6 nicht mehr ausreichend ist, um die von der Solaranlage 42 abgegebene Wärmeenergie zu speichern. Zum Eintrag der mittels der thermischen Solaranlage 22 gewonnenen Wärmeenergie in die Zusatzzisterne 21 wird der Wärmetauscher 17a genutzt. Die die Zusatzzisterne 21 mit dem mittels der Solaranlage 21 aufheizbaren Wärmespeicher 6 verbindenden Leitungen sind als Vorlaufleitung 28 und Rücklaufleitung 29 bezeichnet. Das in der Zusatzzisteme 21 befindliche Wasser wird nur dann der Wärmepumpe 7a zugeleitet, wenn es eine Temperatur von mindestens 6°C hat. Vorzugsweise wird das Temperatuniveau in der Zusatzzisterne 21 auf mindestens 12 - 14°C gehalten. Die Wärmepumpe 7a nutzt dieses Temperaturniveau, um die Temperatur des Wassers im Speicher 6 zu erhöhen. Gleichzeitig wird durch den Betrieb der Wärmepumpe 7a das Temperaturniveau in der Kühlzisterne 15 gesenkt, so dass das Gebäude-Klimatisierungssystem insgesamt auf besonders rationelle und energetisch günstige Art sowohl Heiz- als auch Kühlleistung zur Verfügung stellt.

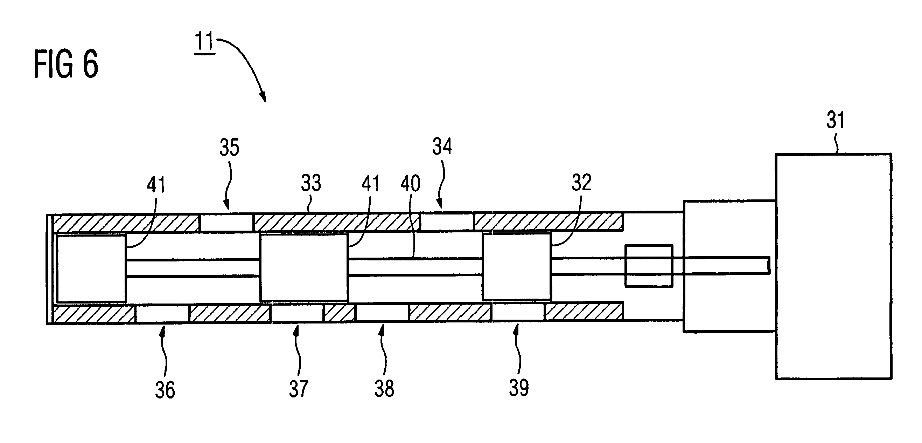

Die Umschaltung zwischen Heiz- und Kühlfunktion ermöglichen Umschaltventile 11, deren Aufbau im Detail aus Fig. 6 ersichtlich ist. Das Umschaltventil 11 ist im Wesentlichen aufgebaut aus einem Ventilkörper 33, in dem ein Schiebekolben 32 mittels einer elektrischen Verstelleinheit 31 verschiebbar ist. Der Schiebekolben 32 weist drei separate Kolbenabschnitte 41 auf, die relativ zueinander unbeweglich auf einer Kolbenstange 40 befestigt sind. Der Ventilkörper 33 weist insgesamt sechs Zu- bzw. Ablauföffnungen 34,35,36,37,38,39 auf, die zum Teil mittels der Kolbenabschnitte 41 geöffnet bzw. geschlossen werden können. Dabei sind die in den Darstellungen nach Fig. 5 und Fig. 6 oben liegenden, dem Ventil- und Mischerblock 10 zugewandten Anschlüsse "Vorlauf Pumpe" 34 und "Rücklauf Pumpe" 35 stets geöffnet. Von den vier in den Darstellungen unten liegenden Anschlüssen 36,37,38,39 sind sowohl bei nach links geschobener Kolbenstange 40, wie in Fig. 6 dargestellt, als auch bei nach rechts geschobener Kolbenstange 40 zwei Anschlüsse geöffnet. Durch die Wahl zwischen diesen Positionen der Kolbenstange 40 kann zwischen Heiz- und Kühlbetrieb gewählt werden. In der Einstellung nach Fig. 6 ist der Heizbetrieb gewählt. Dabei sind die Anschlüsse "Vorlauf Heizung" 38 und "Rücklauf Heizung" 36 geöffnet, während die Anschlüsse "Vorlauf Kühlung" 39 und "Rücklauf Kühlung" 37 geschlossen sind. Wird die Kolbenstange 40 mittels der Verstelleinheit 31 nach rechts verfahren, so sind die Anschlüsse 36,37,38,39 in umgekehrter Weise geschlossen bzw. geöffnet, d.h. die Einstellung auf Kühlbetrieb geändert. Da mindestens zwei Umschaltventile 11 vorgesehen sind, wie aus Fig. 5 ersichtlich, ist ein gleichzeitiger Heiz- und Kühlbetrieb des Gebäude-Klimatisierungssystems möglich.

### Bezugszeichenliste

- 1: Deckenheiz-/Kühlfläche
- 2: Feuchtigkeitssensor
- 3: Raumthermostat
- 3a: Etagenverteiler
- 3b: Stellantrieb
- 4: Wandheiz-/Kühlfläche
- 5: Fußbodenheiz-/Kühlfläche
- 6: Speicher
- 7: Heizgerät
- 7a: Wärmepumpe
- 8: Regeleinheit
- 9: Weiche
- 10: Mischerblock
- 11: Umschaltventil
- 12: Regenwasserzulaufleitung
- 13: Nachspeiseleitung
- 14: Verbindungsleitung
- 15: Regenwasserzisterne
- 16: Filter
- 17: Wärmetauscher
- 17a: Wärmetauscher
- 18: Temperaturfühler
- 19: Überlaufleitung
- 20: Verbindungsleitung
- 21: Zusatzzisterne
- 22: Flüssigkeitsmantel / Schicht
- 23: Außenwandung
- 24: Versorgungsleitung
- 25: Rücklaufleitung
- 26: Vorlaufleitung
- 27: Rücklaufleitung
- 28: Vorlaufleitung
- 29: Rücklaufleitung
- 30: Tauchpumpe
- 31: Verstelleinheit
- 32: Schiebekolben
- 33: Ventilkörper
- 34: Vorlauf Pumpe
- 35: Rücklauf Pumpe
- 36: Rücklauf Heizung
- 37: Rücklauf Kühlung
- 38: Vorlauf Heizung
- 39: Vorlauf Kühlung
- 42: Solaranlage
- 43: Tauchpumpe

- Dₐ: Außendurchmesser
- Dᵢ: Innendurchmesser

## Patentansprüche

1. Gebäude-Klimatisierungssystem mit einem zur Installation in einem Gebäude vorgesehenen Heizkörper (1,4,5) und einer Regenwasserzisterne (15), und mit einem in der Regenwasserzisterne (15) angeordneten Wärmetauscher (17) zur Vermittlung einer Energieübertragung zwischen dem Wasser in der Regenwasserzisterne (15) und dem Heizkörper (1,4,5),
**dadurch gekennzeichnet,**
**dass** der Heizkörper (1,4,5) als Heiz-/Kühlkörper einsetzbar ist, und dass der Wärmetauscher von einem Wärmeträgermedium in einem den Heiz-/Kühlkörper (1,4,5) einschließenden geschlossenen Kreislauf durchströmbar ist.

2. Gebäude-Klimatisierungssystem nach Anspruch 1,
**dadurch gekennzeichnet,**
**dass** der Wärmetauscher (17) als Rohrwärmetauscher ausgebildet ist.

3. Gebäude-Klimatisierungssystem nach Anspruch 1 oder 2,
**dadurch gekennzeichnet,**
**dass** der Wärmetauscher (1,4,5) zumindest annähernd zentrisch in die Regenwasserzisterne (15) eingehängt ist.

4. Gebäude-Klimatisierungssystem nach Anspruch 1 oder 2,
**dadurch gekennzeichnet,**
**dass** der Wärmetauscher (17) an der Innenwandung der Regenwasserzisterne (15) angeordnet ist.

5. Gebäude-Klimatisierungssystem nach Anspruch 4,
**dadurch gekennzeichnet,**
**dass** der Wärmetauscher (17) am Boden der Regenwasserzisterne (15) angeordnet ist.

6. Gebäude-Klimatisierungssystem nach einem der Ansprüche 1 bis 5,
**dadurch gekennzeichnet,**
**dass** der Heiz-/Kühlkörper (1,4,5) als Wandheizung (4) ausgebildet ist.

7. Gebäude-Klimatisierungssystem nach einem der Ansprüche 1 bis 6,
**dadurch gekennzeichnet,**
**dass** der Heiz-/Kühlkörper (1,4,5) als Deckenheizung (1) ausgebildet ist.

8. Gebäude-Klimatisierungssystem nach einem der Ansprüche 1 bis 7,
**gekennzeichnet durch**
eine an die Regenwasserzisterne (15) angeschlossene Kaltwasser-Nachspeiseleitung (13).

9. Gebäude-Klimatisierungssystem nach einem der Ansprüche 1 bis 8,
**gekennzeichnet durch**
eine mittels einer Verbindungsleitung (20) an die Regenwasserzisterne (15) angeschlossene Zusatzzisterne (21).

10. Gebäude-Klimatisierungssystem nach Anspruch 9,
**gekennzeichnet durch**
einen in der Zusatzzisterne (21) eingebauten Wärmetauscher (17a).

11. Gebäude-Klimatisierungssystem nach Anspruch 10,
**gekennzeichnet durch**
eine thermische Solaranlage (42), die zur Beheizung der Zusatzzisterne (21) mittels des in dieser eingebauten Wärmetauschers (17a) vorgesehen ist.

12. Gebäude-Klimatisierungssystem nach Anspruch 11,
**dadurch gekennzeichnet,**
**dass** zur Aufnahme von mit der thermischen Solaranlage (42) gewonnener Energie ein Wärmespeicher (6) vorgesehen ist, aus welchem Energie in die Zusatzzisterne (21) übertragbar ist.

13. Gebäude-Klimatisierungssystem nach einem der Ansprüche 9 bis 12,
**gekennzeichnet durch**
eine die Beheizung der Heiz-/Kühlkörper (1,4,5) ermöglichende, an die Zusatzzisterne (21) angeschlossene, zur Wasserentnahme aus dieser vorgesehene Versorgungsleitung (24).

14. Gebäude-Klimatisierungssystem nach Anspruch 13,
**gekennzeichnet durch**
eine mittels der Versorgungsleitung (24) an die Zusatzzisterne (21) angeschlossene, zur Beheizung der Heiz-/Kühlkörper (1,4,5) vorgesehene Wärmepumpe (7).

15. Gebäude-Klimatisierungssystem nach Anspruch 14,
**dadurch gekennzeichnet,**
**dass** die Wärmepumpe (7) als Wasser/Wasser-Wärmepumpe ausgebildet und mittels einer Rücklaufleitung (25) an die Regenwasserzisterne (15) angeschlossen ist.

16. Gebäude-Klimatisierungssystem nach nach einem der Ansprüche 1 bis 15,
**gekennzeichnet durch**
ein in dem den Heiz-/Kühlkörper (1,4,5) einschließenden Kreislauf angeordnetes, eine Umschaltung zwischen Heiz- und Kühlbetrieb ermöglichendes Umschaltventil (11).

17. Gebäude-Klimatisierungssystem nach nach Anspruch 16,
**dadurch gekennzeichnet,**
**dass** mehrere, einen Kühlbetrieb eines der Heiz-/Kühlkörper (1,4,5) und gleichzeitigen Heizbetrieb eines weiteren der Heiz-/Kühlkörper (1,4,5) ermöglichende Umschaltventile (11) vorgesehen sind.

18. Gebäude-Klimatisierungssystem nach einem der Ansprüche 1 bis 17,
**gekennzeichnet durch**
eine die Regenwasserzisterne (15) umgebende Feuchtigkeit speichernde Schicht (22).

19. Gebäude-Klimatisierungssystem nach Anspruch 18,
**dadurch gekennzeichnet,**
**dass** die Schicht (22) aus einem im Wesentlichen festen Füllmaterial gebildet ist.

20. Gebäude-Klimatisierungssystem nach Anspruch 18 oder 19,
**dadurch gekennzeichnet,**
**dass** die Schicht (22) aus einem Flüssigkeitsmantel gebildet ist.

## Claims

1. Building air-conditioning system having a heating body (1,4,5), which is provided for installation in a building, and a rainwater cistern (15), and having a heat exchanger (17) which is arranged in the rainwater cistern (15) for imparting an energy transmission between the water in the rainwater cistern (15) and the heating body (1,4,5),
**characterized**
**in that** the heating body (1,4,5) can be used as a heating/cooling body, and in that the heat exchanger can be traversed by a heat carrier medium in a closed circuit which includes the heating/cooling body (1,4,5).

2. Building air-conditioning system according to Claim 1,
**characterized**
**in that** the heat exchanger (17) is embodied as a tube heat exchanger.

3. Building air-conditioning system according to Claim 1 or 2,
**characterized**
**in that** the heat exchanger (1,4,5) is suspended at least approximately centrally into the rainwater cistern (15).

4. Building air-conditioning system according to Claim 1 or 2,
**characterized**
**in that** the heat exchanger (17) is arranged on the inner wall of the rainwater cistern (15).

5. Building air-conditioning system according to Claim 4,
**characterized**
**in that** the heat exchanger (17) is arranged on the base of the rainwater cistern (15).

6. Building air-conditioning system according to one of Claims 1 to 5,
**characterized**
**in that** the heating/cooling body (1,4,5) is embodied as a wall heater (4).

7. Building air-conditioning system according to one of Claims 1 to 6,
**characterized**
**in that** the heating/cooling body (1,4,5) is embodied as a ceiling heater (1).

8. Building air-conditioning system according to one of Claims 1 to 7,
**characterized by**
a cold water re-feed line (13) which is connected to the rainwater cistern (15).

9. Building air-conditioning system according to one of Claims 1 to 8,
**characterized by**
an additional cistern (21) which is connected to the rainwater cistern (15) by means of a connecting line (20).

10. Building air-conditioning system according to Claim 9,
**characterized by**
a heat exchanger (17a) which is installed in the additional cistern (21).

11. Building air-conditioning system according to Claim 10,
**characterized by**
a thermal solar plant (42) which is provided for heating the additional cistern (21) by means of the heat exchanger (17a) which is installed therein.

12. Building air-conditioning system according to Claim 11,
**characterized**
**in that**, in order to receive energy obtained by means of the thermal solar plant (42), a heat store (6) is provided from which energy can be transferred into the additional cistern (21).

13. Building air-conditioning system according to one of Claims 9 to 12,
**characterized by**
a supply line (24) which permits the heating of the heating/cooling bodies (1,4,5), is connected to the additional cistern (21) and is provided for the extraction of water from the latter.

14. Building air-conditioning system according to Claim 13,
**characterized by**
a heat pump (7) which is connected by means of the supply line (24) to the additional cistern (21) and is provided for heating the heating/cooling bodies (1,4,5).

15. Building air-conditioning system according to Claim 14,
**characterized**
**in that** the heat pump (7) is embodied as a
water/water heat pump and is connected by means of a return line (25) to the rainwater cistern (15).

16. Building air-conditioning system according to one of Claims 1 to 15,
**characterized by**
a switchover valve (11) which is arranged in the circuit which includes the heating/cooling body (1,4,5), which switchover valve (11) permits a switchover between heating and cooling operation.

17. Building air-conditioning system according to Claim 16,
**characterized**
**in that** a plurality of switchover valves (11) which permit cooling operation of one of the heating/cooling bodies (1,4,5) and at the same time heating operation of a further one of the heating/cooling bodies (1,4,5) are provided.

18. Building air-conditioning system according to one of Claims 1 to 17,
**characterized by**
a moisture-storing layer (22) which surrounds the rainwater cistern (15).

19. Building air-conditioning system according to Claim 18,
**characterized**
**in that** the layer (22) is formed from a substantially solid filling material.

20. Building air-conditioning system according to Claim 18 or 19,
**characterized**
**in that** the layer (22) is formed from a liquid jacket.

## Revendications

1. Système de climatisation pour bâtiments comportant un élément chauffant (1, 4, 5) prévu pour une installation dans un bâtiment et une citerne d'eau de pluie (15), et comportant un échangeur de chaleur (17) disposé dans la citerne d'eau de pluie (15) pour établir un transport d'énergie entre l'eau dans la citerne d'eau de pluie (15) et l'élément chauffant (1, 4, 5),
**caractérisé en ce que**
l'élément chauffant (1, 4, 5) peut être utilisé en tant qu'élément chauffant/élément de refroidissement, et **en ce que** l'échangeur de chaleur peut être parcouru par un caloporteur dans le circuit fermé comprenant l'élément chauffant/élément de refroidissement (1, 4, 5).

2. Système de climatisation pour bâtiments selon la revendication 1, **caractérisé en ce que** l'échangeur de chaleur (17) est réalisé sous la forme d'un échangeur de chaleur tubulaire.

3. Système de climatisation pour bâtiments selon la revendication 1 ou 2, **caractérisé en ce que** l'échangeur de chaleur (1, 4, 5) est suspendu au moins presque au centre de la citerne d'eau de pluie (15).

4. Système de climatisation pour bâtiments selon la revendication 1 ou 2, **caractérisé en ce que** l'échangeur de chaleur (17) est disposé dans la paroi interne de la citerne d'eau de pluie (15).

5. Système de climatisation pour bâtiments selon la revendication 4, **caractérisé en ce que** l'échangeur de chaleur (17) est disposé sur le fond de la citerne d'eau de pluie (15).

6. Système de climatisation pour bâtiments selon l'une des revendications 1 à 5, **caractérisé en ce que** l'élément chauffant/élément de refroidissement (1, 4, 5) est réalisé sous la forme d'un chauffage mural (4).

7. Système de climatisation pour bâtiments selon l'une des revendications 1 à 6, **caractérisé en ce que** l'élément chauffant/élément de refroidissement (1, 4, 5) est réalisé sous la forme d'un chauffage au plafond (1).

8. Système de climatisation pour bâtiments selon l'une des revendications 1 à 7, **caractérisé par** une conduite d'alimentation d'eau froide (13) reliée à la citerne d'eau de pluie (15).

9. Système de climatisation pour bâtiments selon l'une des revendications 1 à 8, **caractérisé par** une citerne supplémentaire (21) reliée à la citerne d'eau de pluie (15) par une conduite de liaison (20).

10. Système de climatisation pour bâtiments selon la revendication 9, **caractérisé par** un échangeur de chaleur (17a) monté dans la citerne supplémentaire (21).

11. Système de climatisation pour bâtiments selon la revendication 10, **caractérisé par** une installation solaire thermique (42), qui est prévue pour le chauffage de la citerne supplémentaire (21) au moyen de l'échangeur de chaleur (17a) monté dans celle-ci.

12. Système de climatisation pour bâtiments selon la revendication 11, **caractérisé en ce qu'**un accumulateur de chaleur (6), à partir duquel de l'énergie peut être transférée dans la citerne supplémentaire (21), est prévu pour la réception de l'énergie délivrée par l'installation solaire thermique (42).

13. Système de climatisation pour bâtiments selon l'une des revendications 9 à 12, **caractérisé par** une conduite d'alimentation (24) permettant le chauffage de l'élément chauffant/élément de refroidissement (1, 4, 5), reliée à la citerne supplémentaire (21), et prévue pour prélever de l'eau de celle-ci.

14. Système de climatisation pour bâtiments selon la revendication 13, **caractérisé par** une pompe à chaleur (7) reliée à la citerne supplémentaire (21) grâce à la conduite d'alimentation (24) et prévue pour le chauffage de l'élément chauffant/élément de refroidissement (1, 4, 5).

15. Système de climatisation pour bâtiments selon la revendication 14, **caractérisé en ce que** la pompe à chaleur (7) est réalisée sous la forme d'une pompe à chaleur-eau/eau et est reliée à la citerne d'eau de pluie (15) par une conduite de retour (25).

16. Système de climatisation pour bâtiments selon l'une des revendications 1 à 15, **caractérisé par** une soupape d'inversion (11) disposée dans le circuit comprenant l'élément chauffant/élément de refroidissement (1, 4, 5), et permettant une inversion entre le chaud et froid.

17. Système de climatisation pour bâtiments selon la revendication 16, **caractérisé en ce que** plusieurs soupapes d'inversion (11) permettant un mode refroidissement de l'un de l'élément chauffant/élément de refroidissement (1, 4, 5) et simultanément un mode chauffage de l'autre de l'élément chauffant/élément de refroidissement (1, 4, 5) sont prévues.

18. Système de climatisation pour bâtiments selon l'une des revendications 1 à 17, **caractérisé par** une couche (22) stockant l'humidité entourant la citerne d'eau de pluie (15).

19. Système de climatisation pour bâtiments selon la revendication 18, **caractérisé en ce que** la couche (22) est réalisée en un matériau de remplissage sensiblement solide.

20. Système de climatisation pour bâtiments selon la revendication 18 ou 19, **caractérisé en ce que** la couche (22) est formée par une enveloppe de refroidissement.
